# EUROPÄISCHE PATENTANMELDUNG

(11) **EP 1 398 233 A2**
(43) Veröffentlichungstag der Anmeldung: **17.03.2004**
(21) Anmeldenummer: 03018347.9
(22) Anmeldetag: 13.08.2003
(51) Int. Cl.: B60T 7/20, B60T 7/10

(54) **Bremseinrichtung für Fahrzeuganhänger mit Nachstelleinrichtung**

(30) Priorität: 29.08.2002 DE 20213535 U
(71) Anmelder: AL-KO KOBER AG, D-89359 Kötz (DE)
(72) Erfinder: Kober, Kurt, 89359 Kötz (DE); Rampp, Armin, 86513 Ursberg/Bayersried (DE)
(74) Vertreter: Ernicke, Hans-Dieter, Dipl.-Ing.

(57) **Zusammenfassung**

Die Erfindung betrifft eine Bremseinrichtung (4) für Fahrzeuganhänger (1), welche eine Auflaufeinrichtung (5) und eine Handbremseinrichtung (6) und ein hieran angeschlossenes Bremsgestänge (10) zur Verbindung mit den Radbremsen (8) aufweist. Das Bremsgestänge ist mit einer Nachstelleinrichtung (7) versehen, die das Bremsgestänge (10) in Anzugrichtung (36) unter Spannung hält, die Nachstelleinrichtung (7) besitzt ein mit dem Bremsgestänge (10) verbundenes Zugelement (20) und ein Sperrelement (21), die über ein gegen die Anzugrichtung (36) wirkendes Rastgesperre (23) in Eingriff miteinander stehen. Eine Spannfeder (35) wirkt in Anzugrichtung (36) nachstellend auf das Zugelement (20).

## Beschreibung

Die Erfindung betrifft eine Bremseinrichtung für Fahrzeuganhänger mit den Merkmalen im Oberbegriff des Hauptanspruches.

Derartige Fahrzeuganhänger sind aus der Praxis bekannt. Sie besitzen ein Fahrgestell mit einer starren V-Deichsel oder einer Rohrdeichsel, ein oder mehreren Achsen und einer auf die Radbremsen wirkenden Bremseinrichtung. Die Bremseinrichtung kann durch eine Auflaufeinrichtung und eine Handbremseinrichtung betätigt werden. Die Bremskräfte werden mittels einer Übertragungseinrichtung zu den Radbremsen geleitet. Am vorderen Ende der Deichsel ist eine Anhängerkupplung, eine sogenannte Zugkugelkupplung, angeordnet, die mit der Auflaufeinrichtung verbunden ist und die im Fahrbetrieb bei einem Auflaufen des Anhängers entstehenden Kräfte auf die Auflaufeinrichtung und weiter auf die Radbremsen überträgt. Bei Fahrzeuganhängern wird die Übertragungseinrichtung, die üblicherweise aus einem Bremsgestänge und/oder einem Seilzug besteht, über eine Schraubverbindung fest mit der Auflaufeinrichtung verbunden. Etwaiger Verschleiß wird durch manuelle Nachstellung mit Werkzeug an der Schraubeinrichtung kompensiert.

Bei Handbremsen für PKW's sind automatische Nachstellvorrichtungen für das Bremsseil bekannt, die dort wegen des verborgenen Einbaus und der schlechten Zugänglichkeit des Bremsseilzugs erforderlich sind. Die WO 95/27642 A1 und die DE 297 10 547 U1 zeigen derartige Vorrichtungen.

Es ist Aufgabe der vorliegenden Erfindung, die Bremseinrichtung bzw. die Auflaufeinrichtung für derartige Fahrzeuganhänger zu verbessern.

Die Erfindung löst diese Aufgabe mit den Merkmalen im Hauptanspruch.
Mit der Nachstelleinrichtung kann Verschleiß an der Bremseinrichtung, insbesondere in der vorzugsweise mechanischen Übertragungseinrichtung, von Fahrzeuganhängern automatisch kompensiert werden. Für die Gestaltung und Anordnung der Nachstelleinrichtung gibt es verschiedene Möglichkeiten. In der einen bevorzugten Ausführungsform ist die Nachstelleinrichtung mit der Auflaufeinrichtung verbunden. Dies hat den Vorteil, dass Verschleiß an der Betriebsbremse und gleichzeitig an der Feststellbremse kompensiert werden kann. Die Handbremseinrichtung ist in diesen Fällen über eine einseitig wirkende Schleppeinrichtung mit der Auflaufeinrichtung verbunden.

In der anderen Variante kann die Nachstelleinrichtung in die Übertragungseinrichtung integriert sein, wobei diese ansonsten in konventioneller Weise mit der Auflaufeinrichtung und der Handbremseinrichtung verbunden ist.

Besondere Vorteile bietet die Nachstelleinrichtung auch bei der Erstmontage einer Bremseinrichtung. Einerseits wird die Erstmontage mit einer zunächst blockierten Nachstelleinrichtung deutlich erleichtert. Vereinfacht wird auch die Einstellung der Bremseinrichtung, weil nach Lösen der Blockade die Nachstelleinrichtung sowohl das Bremsgestänge, wie auch die angeschlossenen Seilzüge oder Bowdenzüge automatisch und richtig einstellt und unter Spannung setzt. Besondere Fachkenntnisse sind hierfür nicht erforderlich, so dass der Personalaufwand beim Endkunden und Hersteller von Fahrzeuganhängern hinsichtlich Qualifikation und Arbeitseinsatz verringert wird.

In den Unteransprüchen sind vorteilhafte Ausgestaltungen der Erfindung angegeben.

Die Erfindung ist in den Zeichnungen beispielsweise und schematisch dargestellt. Im Einzelnen zeigen:
- Figur 1 und 2:: einen Fahrzeuganhänger mit einer Betriebs- und Feststellbremseinrichtung sowie einer Nachstelleinrichtung in Seitenansicht und geklappter Draufsicht,
- Figur 3:: eine Auflaufeinrichtung mit angeschlossener Nachstelleinrichtung in einer geschnittenen Seitenansicht,
- Figur 4 und 5:: die Nachstelleinrichtung von Figur 3 in Seitenansicht und geklappter Draufsicht,
- Figur 6:: eine Unteransicht der Nachstelleinrichtung von Figur 4,
- Figur 7:: eine perspektivische Ansicht der Nachstelleinrichtung schräg von unten,
- Figur 8 und 9:: eine Detaildarstellung der Nachstelleinrichtung ohne Umlenkhebel in Seitenansicht und geklappter sowie geschnittener Draufsicht,
- Figur 10 und 11:: eine in die Übertragungseinrichtung integrierte Nachstelleinrichtung in zwei Betriebsstellungen in geschnittener Seitenansicht,
- Figur 12 und 13:: eine Variante der Nachstelleinrichtung von Figur 10 und 11,
- Figur 14:: eine Draufsicht auf ein Fahrgestell mit einer Übertragungseinrichtung,
- Figur 15:: eine perspektivische Ansicht der Nachstelleinrichtung mit einer Verriegelung,
- Figur 16, 17:: eine Variante der Nachstelleinrichtung am Umlenkhebel von Figur 3 bis 9 in Auslieferungszustand und am Ende des Nachstellwegs,
- Figur 18, 19:: die Nachstelleinrichtung von Figur 16, 17 in Betriebsstellung und in unterschiedlichen perspektivischen Ansichten,
- Figur 20 bis 22:: Einzelteile der Nachstelleinrichtung und
- Figur 23, 24:: weitere perspektivische Darstellungen der Nachstelleinrichtung.

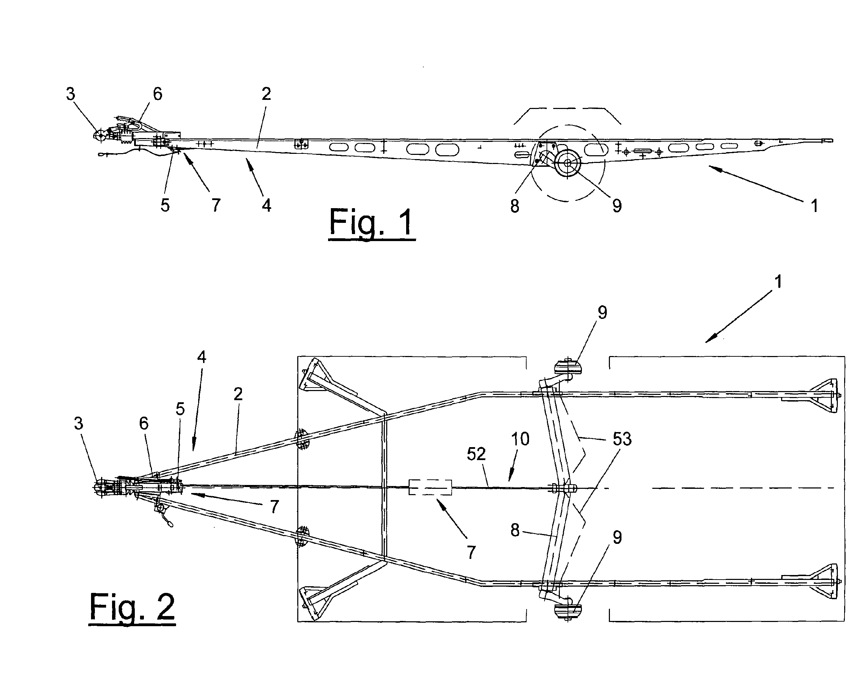

Figur 1 und 2 zeigen in Seitenansicht und Draufsicht einen Fahrzeuganhänger (1), der ein Fahrgestell mit ein oder mehreren Achsen (8) besitzt. Das Fahrgestell hat in der gezeigten Ausführungsform eine starre V-Deichsel (2) mit einer Anhängerkupplung (3) und üblicherweise einer Kugelkopfkupplung am vorderen Deichselende. Alternativ kann auch eine einfache starre Einrohrdeichsel mit Anhängerkupplung Verwendung finden. Der Fahrzeuganhänger (1) ist mit einer Bremseinrichtung (4) ausgerüstet, die vorzugsweise eine Betriebsbremse und eine Feststellbremse umfasst. Die Bremseinrichtung (4) besitzt ein oder mehrere Bremsauslöser, die mittels einer vorzugsweise mechanischen Übertragungseinrichtung (10) mit den Radbremsen (9) verbunden sind. Die Bremsauslöser können beliebig geeigneter Art sein und bestehen üblicherweise aus einer Auflaufeinrichtung (5) und einer Handbremseinrichtung (6). Die Übertragungseinrichtung (10) kann ebenfalls beliebig ausgestaltet sein. Im gezeigten Ausführungsbeispiel handelt es sich um ein Bremsgestänge (52), welches am rückwärtigen Ende über Seilzüge oder Bowdenzüge (53) mit den Radbremsen gekoppelt ist. Alternativ kann die Übertragungseinrichtung (10) vollständig als Seilzug ausgebildet sein. Außer Stangen oder Seilen sind auch beliebige andere geeignete mechanische Übertragungsmittel sind möglich.

Die Bremseinrichtung (4) bzw. die Auflaufeinrichtung (5) ist mit einer Nachstelleinrichtung (7) ausgerüstet, mit der automatisch Verschleiß in der Übertragungseinrichtung (10), z.B. Längungen der Seilzüge, Dehnungen im Bremsgestänge (52), den Seilzügen (53) oder dgl. kompensiert werden. Durch diese Nachstelleinrichtung (7) wird die Bremswirkung unter allen Betriebsbedingungen sichergestellt. Außerdem bleiben die Auflaufeinrichtung (5) und die Handbremseinrichtung (6) stets voll funktionsfähig und behalten ihren optimalen Auflaufhub bzw. Handbremsbetätigungsweg.

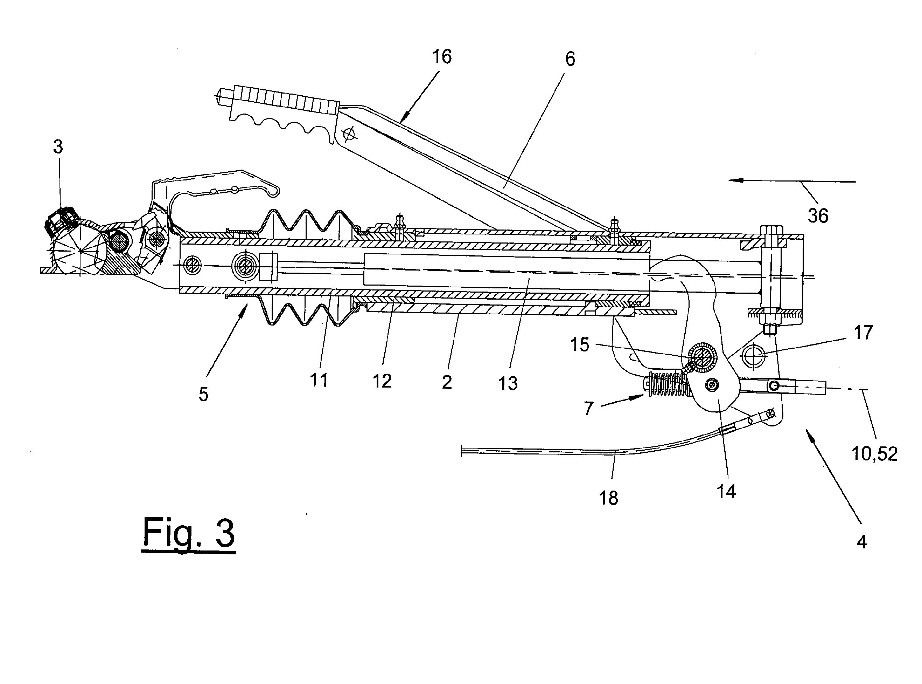

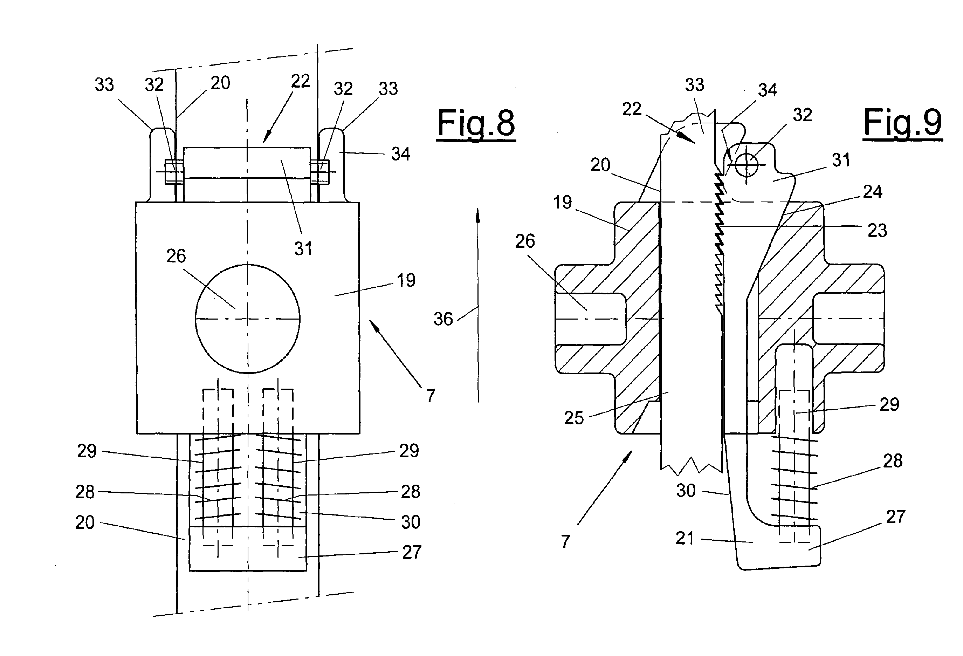

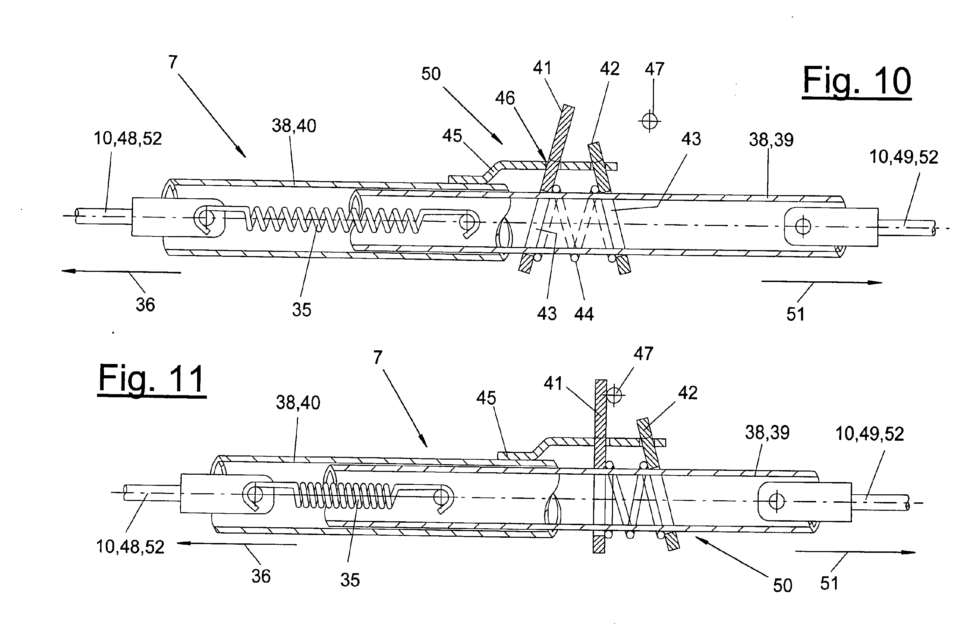

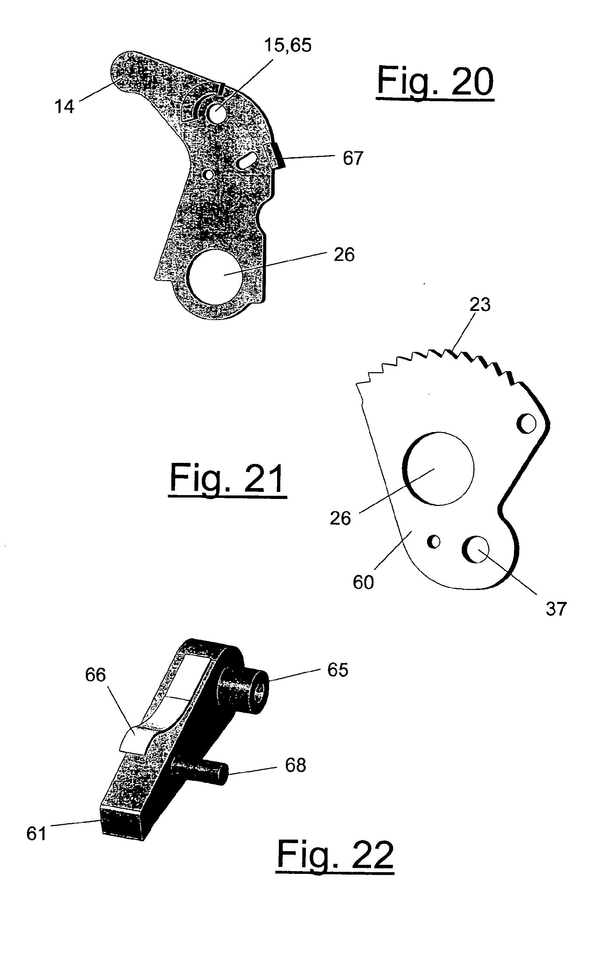

Für die Anordnung und Ausbildung der Nachstelleinrichtung (7) sind verschiedene Varianten dargestellt. Bei Figur 3 bis 9 und Figur 16 bis 24 ist die Nachstelleinrichtung (7) in der besonders bevorzugten Ausführungsform an die Auflaufeinrichtung (5) angeschlossen. Figur 10 bis 13 zeigen alternativ zwei Varianten einer in die Übertragungseinrichtung (10) integrierten Nachstelleinrichtung (7).

In Figur 3 ist eine Auflaufeinrichtung (5) im Detail und vergrößert dargestellt. Sie besteht aus einer Zugstange (12), die am vorderen Ende die Anhängerkupplung (3) trägt und die in einem Führungsrohr (12), vorzugsweise einer Leichtmetallkartusche längsbeweglich gelagert ist. Die Einfahrbewegungen der Zugstange (11) beim Bremsen werden über einen innen liegenden Dämpfer (13) gegenüber der Deichsel (2) abgedämpft. Am rückwärtigen Ende ist die Zugstange (11) mit einem Umlenkhebel (14) verbunden, welcher um eine quer liegende Schwenkachse (15) drehbar gelagert ist. Das obere Hebelende ist länger als das untere und ist über eine hakenförmig gebogene Nase in Kontakt mit der Zugstange (11). Am unteren Hebelende ist über ein quer liegendes Lager (26) die Nachstelleinrichtung (7) schwenkbar befestigt, welche ihrerseits am rückwärtigen Ende mit der Übertragungseinrichtung (10) über einen Anschluss (37) schwenkbar verbunden ist. Das Führungsrohr (12) und der Zapfen des Schwenklagers (15) sind in der Deichsel (2) befestigt.

Wenn das Zugfahrzeug (nicht dargestellt) bremst, läuft der Fahrzeuganhänger (1) durch seine Massenträgheit auf. Hierdurch wird am Kupplungspunkt eine Deichselkraft erzeugt. Nach Überwinden einer Ansprechschwelle des Dämpfers (13) wird die Zugstange (11) eingeschoben, wobei der Umlenkhebel (14) verschwenkt wird und mittels der zwischengeschalteten Nachstelleinrichtung (7) die Übertragungseinrichtung (10) in Anzugrichtung (36) bewegt und dabei die Radbremsen (9) zuspannt. Bis die Bremswirkung aufgehoben ist und an der Anhängerkupplung (3) wieder eine Zugkraft ansteht, wird die Zugstange (11) wieder aus der Kartusche (12) herausgezogen, wobei die sich entspannenden Radbremsen (9) die Übertragungseinrichtung (10) zurückziehen und den Umlenkhebel (14) wieder in die Ausgangsstellung von Figur 3 bewegen.

Gegenstand der Erfindung ist einerseits die Bremseinrichtung (4) mit den beiden nachfolgend beschriebenen Nachstelleinrichtungen (7). Erfindungsgegenstand ist außerdem auch die Auflaufeinrichtung (5) mit der Nachstelleinrichtung (7). Die Nachstelleinrichtung (7) lässt sich an vorhandenen Auflaufeinrichtungen (5) nachrüsten. Alternativ ist es auch möglich, die komplette Auflaufeinrichtung (5) mit der angebauten Nachstelleinrichtung (7) an einem Fahrzeuganhänger (1) nachzurüsten oder eine vorhandene Auflaufeinrichtung auszutauschen und umzurüsten. In einer weiteren Variante kann die Nachstelleinrichtung (7) bei der Erstausrüstung neuer Fahrzeuganhänger (1) in die Bremseinrichtung (4) integriert sein.

Die Bremseinrichtung (4) ist üblicherweise auch mit einer Handbremseinrichtung (6) ausgerüstet. Diese besteht aus einem Handbremshebel (16), der vorzugsweise gleichachsig mit dem Umlenkhebel (14) auf der Schwenkachse (15) drehbar gelagert ist und der am unteren Ende einen Mitnehmer (17) aufweist, der in eine einseitig wirkende Schleppverbindung mit dem unteren Ende des Umlenkhebels (14) treten kann. Bei Betätigung des Handbremshebels (16) nimmt der schwenkende Mitnehmer (17) den Umlenkhebel (14) mit und betätigt hierdurch die Übertragungseinrichtung (10) und die Radbremsen (9). In Figur 3 ist der Übersicht halber der Mitnehmer (17) in Distanz vom Umlenkhebel (14) dargestellt. In der Praxis liegt er in der entspannten Ausgangsstellung zur Minimierung des Handbremswegs bereits am Umlenkhebel (14) an. Am Handbremshebel (16) kann ferner noch ein Abreißseil (18) befestigt sein. Außerdem kann ein integrierter Federspeicher zur Betätigung von Radbremsen mit Rückfahrautomatik vorhanden sein.

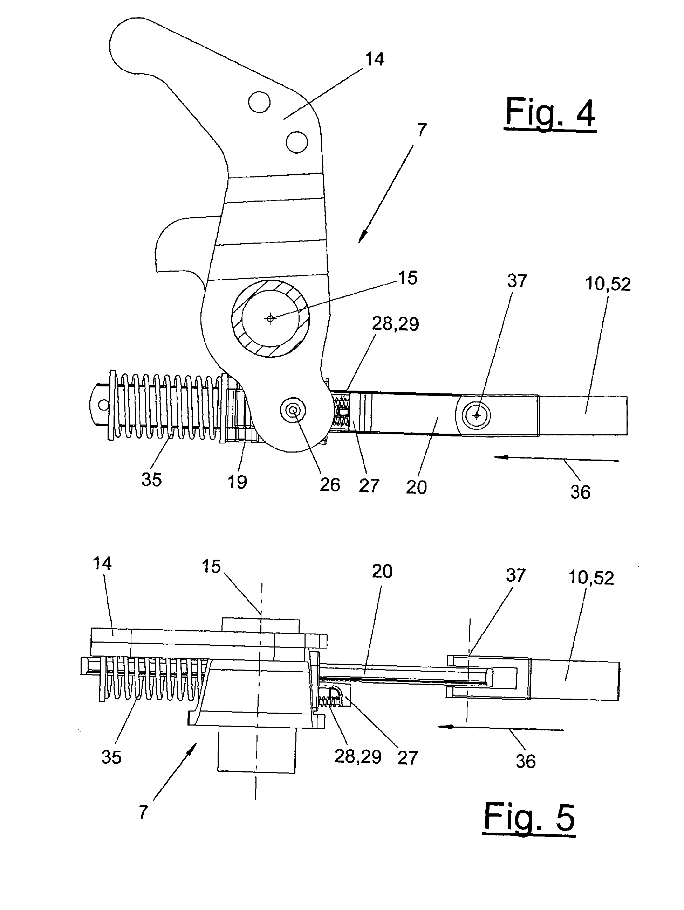

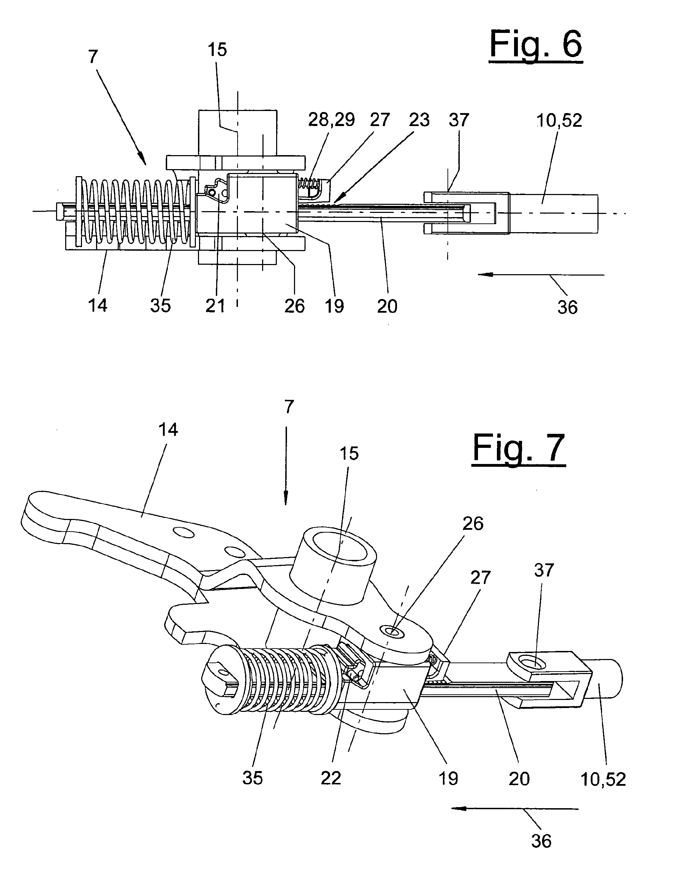

Die Nachstelleinrichtung (7) ist in Figur 4 bis 9 in einer ersten Variante im Detail dargestellt. Wie insbesondere Figur 7 verdeutlicht, ist der Umlenkhebel (14) am unteren Hebelende gespreizt, wodurch zwei in Richtung der Schwenkachse (15) distanzierte Hebelflansche entstehen, zwischen denen die Nachstelleinrichtung (7) aufgenommen und mittels des Lagers (26) schwenkbar und parallelachsig zur Schwenkachse (15) gelagert ist. Der Umlenkhebel (14) kann oberhalb der Schwenkachse (15) eine Anschlagnase aufweisen, mit der der Hebelweg bzw. Auflaufweg begrenzt wird. Hierdurch werden auch die Bremskräfte und die Betätigung der Radbremsen (9) auf ein Maximalmaß begrenzt. Eine Auflaufbegrenzung ist zudem für Radbremsen (9) vorgesehen, die mit einer Rückfahrautomatik ausgestattet sind, welche eine Rückwärtsfahrt des Gespanns und ein schleifendes Ausweichen der Bremsorgane erlaubt.

Die Nachstelleinrichtung (7) kann in gleicher Weise wie bei der DE 297 10 547 U1 ausgebildet sein. Sie besteht aus einem Klemmgehäuse (19), welches über das Lager (26) mit dem Umlenkhebel (14) drehbar verbunden ist. Das Klemmgehäuse (19) besitzt einen innen liegenden Hohlraum (25), in dem ein Zugelement (20) und ein Sperrelement (21) beweglich geführt sind. Das Zugelement (20) ist in dieser Variante als Zahnstange und das Sperrelement (21) als Klemmstück ausgebildet. Das Zugelement (20) und das Klemmstück (21) sind mit einem einseitig wirkenden Rastgesperre (23) versehen, welches z.B. als Sägezahnung ausgeführt ist. Das Rastgesperre (23) wirkt entgegen der Anzugrichtung (36), so dass eine Drehbewegung des Umlenkhebels (14) unter Mitnahme des Klemmgehäuses (19) unmittelbar in eine Anzugbewegung der Übertragungseinrichtung (10) umgesetzt wird. Das Zugelement (20) ist als einseitig belegte Zahnstange ausgebildet, die auf der einen Seite über die Verzahnung mit dem Klemmstück (21) zusammenwirkt und auf ihrer ebenen Rückseite und den schmalen ebenen Seitenflächen an der ebenfalls ebenen Hohlraumwandung formschlüssig geführt ist. Die Zahnstange (20) kann sich dadurch nur in Axialrichtung bewegen. Am vorderen Ende der Zugstange (20) ist eine Spannfeder (35), hier in Form einer Schraubendruckfeder montiert, die sich an ihrem vorderen Ende über einen Teller an der Zahnstange (20) und am rückwärtigen Ende am Klemmgehäuse (19) abstützt.

Das Klemmstück (21) hat am vorderen Ende einen keilförmig verbreiterten Kopf (31) und am hinteren Ende einen Steg (30) mit einem quer liegenden Ansatz (27), an dem ein oder mehrere Führungsstifte (32) mit aufgezogenen Druckfedern (28) angeordnet sind. Die Führungsstifte (32) sind in Sackbohrungen an der Rückseite des Klemmgehäuses (19) in Längsrichtung der Zahnstange (20) beweglich geführt. Der verbreiterte Kopf (31) trägt auf der einen Seite die Verzahnung für das Rastgesperre (23), die seitlich über den Steg (30) vorragt. Auf der anderen Seite bildet der Kopf (31) mit seiner Keilfläche zusammen mit einer ebenfalls schräg ausgestellten Hohlraumwandung des Klemmgehäuses (19) eine Keilführung (24), mit der das Klemmstück (21) unter Einwirkung der Feder(n) (28) zur Zahnstange (20) in und in Rasteingriff bewegt wird.

Am Kopf (31) kann hierbei eine Zwangsführung (22) vorhanden sein, welche aus einem beidseits am Kopf (31) seitlich vorstehenden Führungsstift (32) und einer schrägen Leitfläche (34) an zwei Führungsansätzen (33) des Klemmgehäuses (19) besteht. Der vorzugsweise drehbar gelagerte Führungsstift (32) liegt unter Wirkung der Keilführung (24) und der Feder(n) (28) an der Leitfläche (34) an, so dass die Bewegungen des Klemmstücks (21) stets kontrolliert sind.

Wenn in der Übertragungseinrichtung (10) durch Längungen oder dgl. Verschleiß oder Spiel auftritt, kann die Spannfeder (35) in Ruhestellung der Auflaufeinrichtung (5) die Zahnstange (20) mit der angeschlossenen Übertragungseinrichtung (10) in Anzugrichtung (36) nach vorn bewegen, wodurch das Spiel kompensiert und die Übertragungseinrichtung (10) wieder gespannt wird. Durch das einseitig wirkende Rastgesperre (23) und die Sägeverzahnung kann hierbei die Zahnstange (20) gegenüber dem Klemmstück (21) ratschend gleiten. Unter Wirkung der Spannfeder (35) wird hierbei das Klemmstück (21) gegen die Kraft der schwächeren Feder(n) (28) in Anzugrichtung (36) ggf. ein Stück mitgenommen. Nach der Aufnahme des Spiels oder Verschleißes ziehen die Federn (28) das Klemmstück (21) wieder entgegen der Anzugrichtung (36) zurück in die Ausgangsstellung im Klemmgehäuse (19), wobei über die Keilführung (24) und die gegenüber liegende Zwangsführung (22) wieder der Verzahnungseingriff des Rastgesperres (23) hergestellt und gesichert wird. Bei der nächsten Bremsenbetätigung wird über die geschlossene Nachstelleinrichtung (7) mit dem eingefallenen Rastgesperre (23) sofort wieder die Übertragungseinrichtung (10) betätigt.

Die Nachstelleinrichtung (7) besitzt eine Löseeinrichtung, die in Ruhe- oder Lösestellung der Bremseinrichtung (4) bzw. der Bremsauslöser (5,6) das Rastgesperre (23) öffnet. Bei der Variante von Figur 4 bis 9 ist dies z.B. ein ortsfester Anschlag (nicht dargestellt), an dem das Klemmstück (21) mit seinem Ansatz (27) anschlägt. In Ruheoder Lösestellung des Umlenkhebels (14) wird durch den Anschlag das Klemmstück (19) in Anzugrichtung (36) eingeschoben und mit seiner Verzahnung außer Eingriff mit der Zahnstange (20) gebracht. Die Zahnstange (20) kann sich dadurch axial frei gegenüber dem Klemmstück (21) bewegen. Die vorbeschriebene Verschleißaufnahme kann dadurch unter Umständen wieder rückgängig gemacht werden, insbesondere wenn es sich um keinen echten Verschleiß, sondern um eine temporäre Blockade der eigentlich geöffneten Radbremsen (9) in einer Spannstellung handelt. Dies kann z.B. bei einer Vereisung der Radbremsen (9) eintreten. Die Nachstelleinrichtung (7) würde eine solche Spannstellung der Radbremsen (8) bei geöffneten Bremsauslösern (5,6) als Verschleiß fehlinterpretieren. Durch die Löseeinrichtung können sich die aufgetauten Radbremsen (9) wieder entspannen, wobei durch die freie Beweglichkeit der Zahnstange (20) die fehlerhafte Verschleißaufnahme wieder rückgängig gemacht und die Zahnstangen (20) gegen die Anzugrichtung (36) zurückgezogen wird.

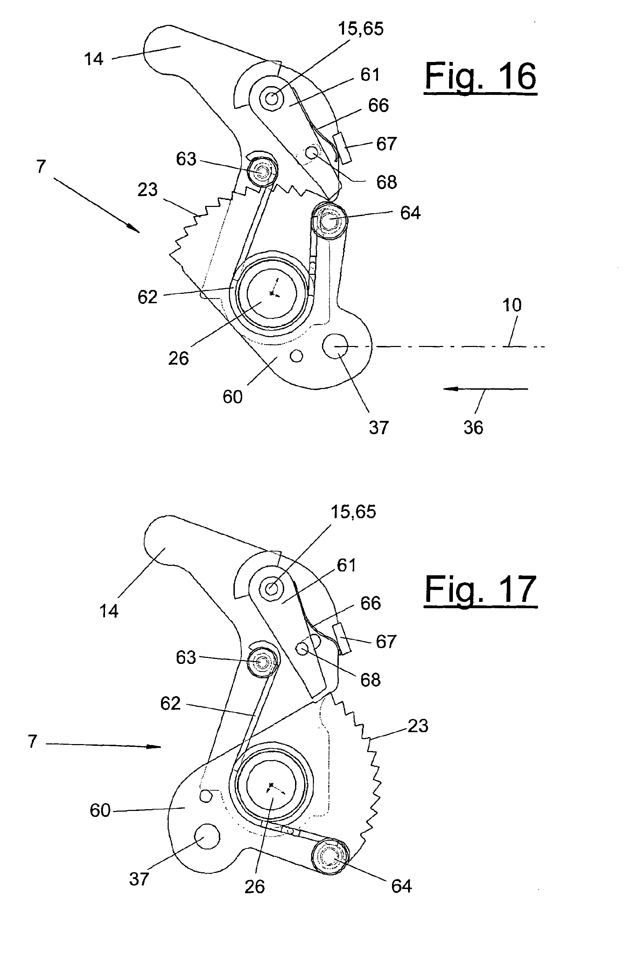

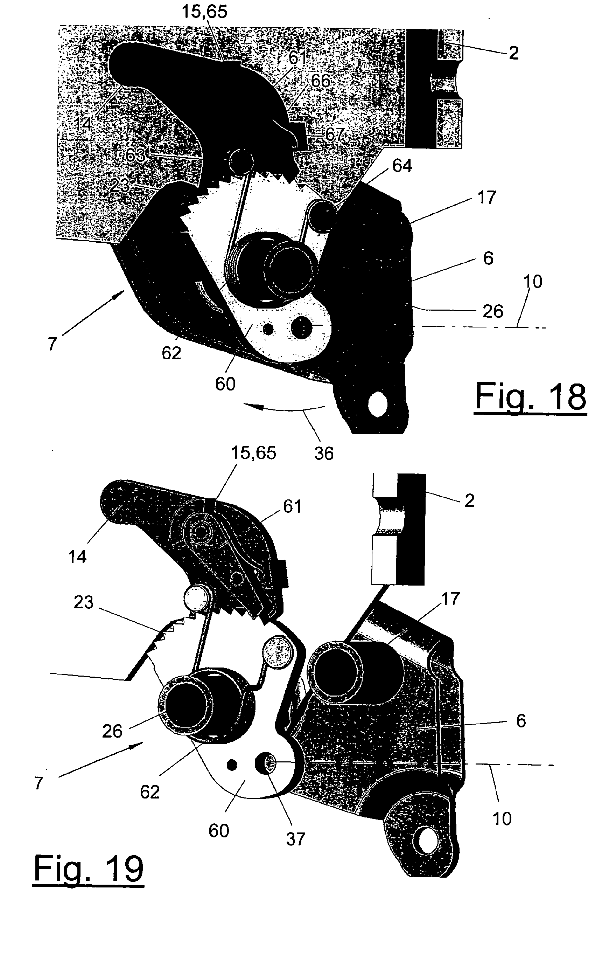

Eine zweite Variante einer dem Umlenkhebel (14) zugeordneten Nachstelleinrichtung (7) ist in Figur 16 bis 24 dargestellt. Figur 18 und 19 zeigen die Nachstelleinrichtung (7) in der Betriebsstellung mit einem im Eingriff befindlichen Rastgesperre (23). Figur 16 und 17 zeigen Extremstellungen im Anlieferungszustand gem. Figur 16 und im übermäßigen Verschleißzustand gem. Figur 17, wobei in beiden Fällen das Rastgesperre (23) außer Eingriff ist.

Das Zugelement ist in diesem Fall als Zahnscheibe (60) ausgebildet, die mittels eines Lagers (26) drehbar am unteren Ende des Umlenkhebels (14) gelagert ist. Die Spannfeder ist hier als Spreizfeder (62) ausgebildet, die auf dem Lagerrohr (26) aufgezogen ist und die die Zahnscheibe (60) in Anzugrichtung (36) zu drehen versucht. Die Spreizfeder (62) ist hier als Schenkelfeder ausgebildet, deren einer Schenkel oberhalb der Zahnscheibe (60) an einem Lagerstift des Umlenkhebels (14) eingehängt ist und sich hier hebelfest abstützt. Der andere Schenkel ist an einem zweiten Lagerstift (64) eingehängt, der sich am oberen Rand der Zahnscheibe (60) befindet.

Die Zahnscheibe (60) hat am unteren Ende ein Auge (37) oder eine andere drehbare Lagerung zur Verbindung mit der schematisch angedeuteten Übertragungseinrichtung (10). Am oberen Ende trägt die Zahnscheibe (60) einen Zahnbogen, der mit einem Sperrelement in Form einer Klinke (61) zusammenwirkt. Die Klinke (61) ist über ein Klinkenlager (65) drehbar am Umlenkhebel (14) gelagert. Das Klinkenlager (65) kann zugleich auch die Schwenkachse (15) des Umlenkhebels (14) sein. Die Klinke (61) wird von einer Klinkenfeder (66) belastet und zur Zahnscheibe (60) hin in Eingriffstellung bewegt. Die Klinkenfeder (66) stützt sich an einem Anschlag (67) ab, welcher am Rand des Umlenkhebels (14) befestigt ist. Das Rastgesperre (23) ist bei der zweiten Ausführungsvariante ebenfalls vorzugsweise als Sägeverzahnung ausgebildet, die eine Verschleißaufnahme und ein Nachstellen unter Einwirkung der Spreizfeder (62) ermöglicht.

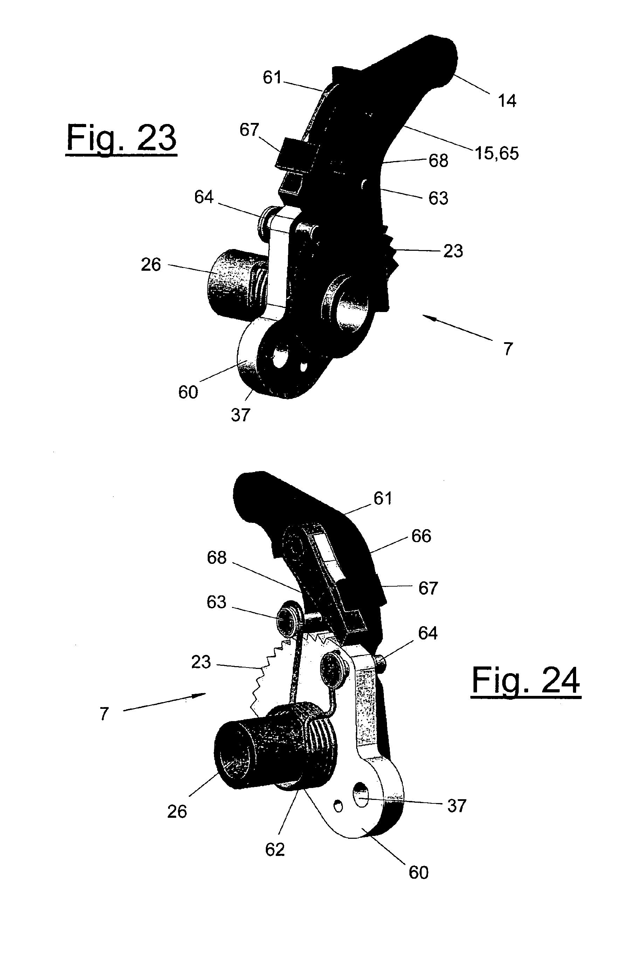

Um ein Öffnen des Rastgesperres (23) in Ruhe- oder Lösestellung der Bremseinrichtung (4) zu ermöglichen, besitzt die Klinke (61) einen Lösestift (68), der durch eine geeignete Öffnung, z.B. ein Langloch, durch den Umlenkhebel (14) ragt. Figur 23 zeigt diese Anordnung. Der Lösestift (68) kann mit einem nicht dargestellten Anschlag zusammenwirken, der die Klinke (61) in Ruhe- oder Lösestellung von der Zahnscheibe (60) gegen die Klinkenfeder (66) wegbewegt und dadurch das Rastgesperre (23) öffnet. Sobald einer der Bremsauslöser (5,6) betätigt wird, gerät der Lösestift (68) außer Eingriff mit dem Anschlag und die Klinkenfeder (66) bringt die Klinke (61) in Eingriff mit der Zahnscheibe (60) in ihrer verschleißbedingten Position und Drehstellung.

Bei dieser zweiten Ausführungsvariante hat der Handbremshebel (6) ebenfalls einen Mitnehmer (17), der auf den Umlenkhebel (14) einwirkt. Dies kann ggf. ein mittelbares Einwirken über die Zahnscheibe (60) sein, indem der Mitnehmer (17) etwa in Höhe der Lagerachse (26) gegen eine rückwärtige Einbuchtung der Zahnscheibe (60) anschlagen kann.

In den in Figur 10 bis 13 dargestellten zwei Varianten ist die Nachstelleinrichtung (7) in die Übertragungseinrichtung (10) an geeigneter Stelle integriert. Sie befindet sich hierbei vorzugsweise in einem Bereich, wo eine Quertraverse oder ein anderes festes Fahrgestellteil vorhanden ist. In Figur 2 ist die Nachstelleinrichtung (7) nur der Übersicht halber frei schwebend dargestellt.

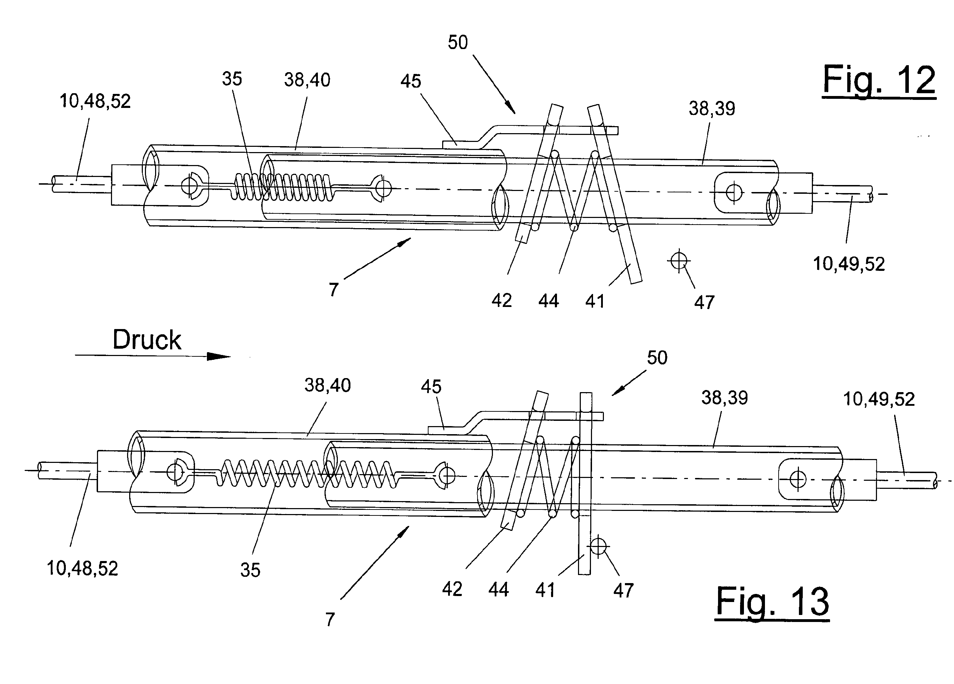

In den zwei Varianten von Figur 10 bis 13 weist die Nachstelleinrichtung (7) jeweils ein zweiteiliges Teleskoprohr (38) und ein federbelastetes Klinkengesperre (50) auf, welches mit einem relativ ortsfesten Anschlag (47) zusammen wirkt, der z.B. an einer Traverse oder dgl. angeordnet ist. Das Teleskoprohr (38) besitzt zwei ineinander geführte Rohrabschnitte (39,40), die untereinander durch eine innen liegende Spannfeder (35) verbunden sind. In der ersten Variante von Figur 10 bis 11 handelt es sich um eine Zugfeder. In Figur 12 und 13 ist es eine Druckfeder. Die beiden Rohrabschnitte (39,40) sind jeweils an ihren rückwärtigen Enden mit den Gestängeteilen (48,49) eines geteilten Bremsgestänges (52) verbunden. Die Spannfeder (35) ist hierbei an einem Bolzen oder dgl. im kleineren inneren Rohrabschnitt (39) eingehängt bzw. abgestützt. Am anderen Ende erfolgt die Abstützung an einem Querbolzen im größeren äußeren Rohrabschnitt (40), an dem vorzugsweise auch das zugehörige Gestängeteil (48) schwenkbar angeschlossen ist.

Das Klinkengesperre (50) besteht in beiden Varianten jeweils aus zwei unterschiedlich langen Sperrklinken (41,42), die beide auf dem inneren Rohrabschnitt (39) kippfähig gelagert sind. Sie weisen hierzu jeweils eine Klinkenöffnung (43) auf, deren Durchmesser etwas größer als der Durchmesser des Rohrabschnitts (39) ist. Zwischen den Sperrklinken (41,42) ist eine Klinkenfeder (44) angeordnet und auf den Rohrabschnitt (39) aufgezogen, welche die beiden Klinken (41,42) am rohrseitigen Ende spreizt. Am anderen Ende sind die Sperrklinken (41,42) in einem Haltebügel (45) mittels Bügelöffnungen (46) geführt, welche ebenfalls etwas größer als die Sperrklinken (41,42) sind. Der Haltebügel (45) ist seinerseits am äußeren Rohrabschnitt (40) befestigt. Bei dieser Klinkenanordnung spreizt die Klinkenfeder (44) die beiden in den Bügelöffnungen (46) gehaltenen Sperrklinken (41,42), wodurch diese die gezeigte Kippstellung einnehmen und sich mit den Rändern ihrer Klinkenöffnungen (43) auf dem inneren Rohrabschnitt (39) verkeilen oder einkrallen. In dieser Spreizstellung schafft das Klinkengesperre (50) eine starre Verbindung zwischen den beiden Rohrabschnitten (38,39), so dass die Spannfeder (35) sich nicht bewegen kann.

Wenn bei der Variante der Nachstelleinrichtung (7) von Figur 10 und 11 mit der Zugfeder (35) Verschleiß oder Spiel der Übertragungseinrichtung (10) entsteht, können die Radbremsen (9) das Bremsgestänge (52) mit der integrierten Nachstelleinrichtung (7) in die zur Anzugrichtung (36) entgegengesetzte Nachstellrichtung (51) ziehen. Hierdurch gelangt die längere Sperrklinke (41) in Anlage mit dem Anschlag (47). Die kürzere Sperrklinke (42) kann entgegen den Anschlag (47) ungehindert passieren. In der in Figur 11 verdeutlichten Anschlagstellung wird die längere Sperrklinke (41) aufrecht gestellt, wodurch die Keil- oder Klemmwirkung des Klinkengesperres (50) auf die Rohrabschnitte (39,40) aufgehoben wird. In dieser Stellung kann die Spannfeder (35) wirksam werden und zur Aufnahme des Spiels den inneren Rohrabschnitt (39) in den äußeren Rohrabschnitt (40) ziehen und hierdurch die Übertragungseinrichtung (10) spannen. Die Bremseinrichtung (4) ist bei dieser Nachstellfunktion in Ruhestellung, so dass die relativ stark dimensionierten Radbremsen (9) zur Verschleißaufnahme tätig werden können.

Sobald die Bremseinrichtung (4) wieder betätigt und das Bremsgestänge (52) angespannt wird, wird das Klinkengesperre (50) vom Haltebügel (45) mitgenommen und aus der in Figur 11 gezeigten Anschlagstellung bewegt. Nach Lösen vom Anschlag (47) kann die Klinkenfeder wieder wirksam werden und die Sperrklinken (41,42) in die in Figur 10 gezeigte Kipp- und Klemmstellung bewegen. Nach Lösen vom Anschlag (47) wird somit sofort wieder die starre Verbindung zwischen den Rohrabschnitten (39,40) hergestellt. Figur 10 zeigt hierbei die Spannstellung oder Bremsstellung. Dies kann zugleich auch die Ausgangsstellung im Ruhezustand bei gelöster Bremseinrichtung (4) und neuem, frisch eingestelltem Bremsgestänge (52) sein.

Die Variante von Figur 12 und 13 zeigt eine kinematische Umkehr der Nachstelleinrichtung (7) von Figur 10 und 11. Im erstgenannten Ausführungsbeispiel von Figur 10 und 11 werden wie bei Bremseinrichtungen (4) üblich Zugkräfte über das Bremsgestänge (52) übertragen. Bei der Abwandlung von Figur 12 und 13 werden Druckkräfte übertragen.

Bei Auftreten von Verschleiß können diese Druckkräfte das Klinkengesperre (50) mit der längeren Sperrklinke (41) wiederum in sperrende Anlage am Anschlag (47) bewegen, wodurch die Sperrklinke (41) gerade gestellt und die Sperr- und Klemmwirkung des Klinkengesperres (50) aufgehoben wird. In dieser in Figur 13 gezeigten Stellung kann die Druckfeder (35) die Rohrabschnitte (39,40) unter Aufnahme des Spiels auseinander drücken. Sobald im Betrieb eine erneute Druckbelastung von der Seite des echten Gestängeteils (10) erfolgt, wird die Anschlagstellung verlassen, wobei das Klinkengesperre (50) wieder einrastet und die starre Verbindung zwischen den Rohrabschnitten (39,40) herstellt.

Die in Figur 10 bis 13 gezeigte Nachstelleinrichtung (7) kann außer bei Bremseinrichtungen (4) für die gattungsgemäßen Fahrzeuganhänger (1) auch bei beliebigen anderen Übertragungseinrichtungen mit Erfolg benutzt werden. Diese Gestaltung hat insofern eigenständigen Charakter.

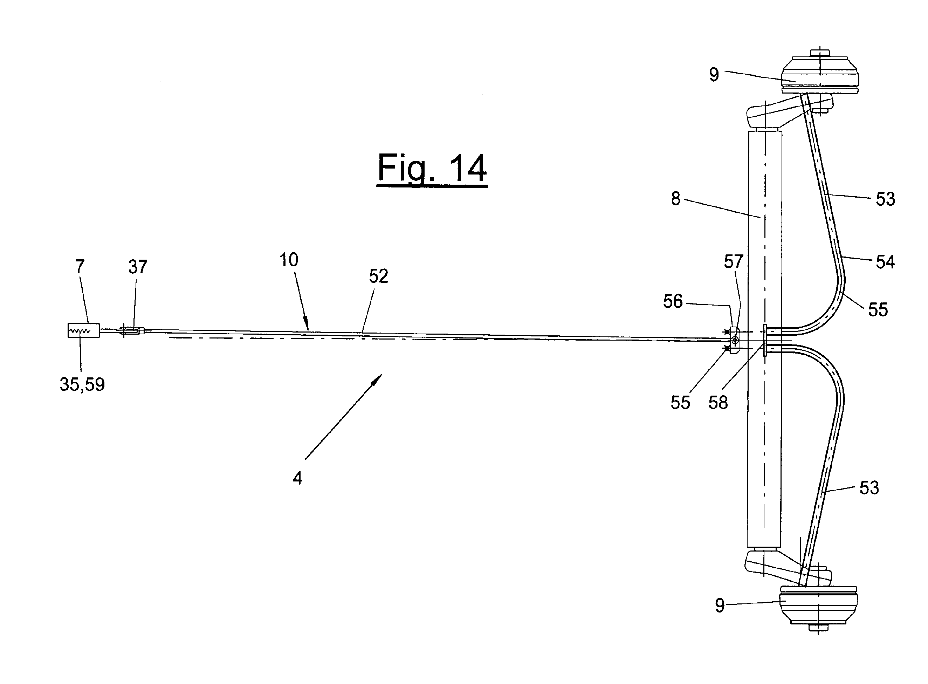

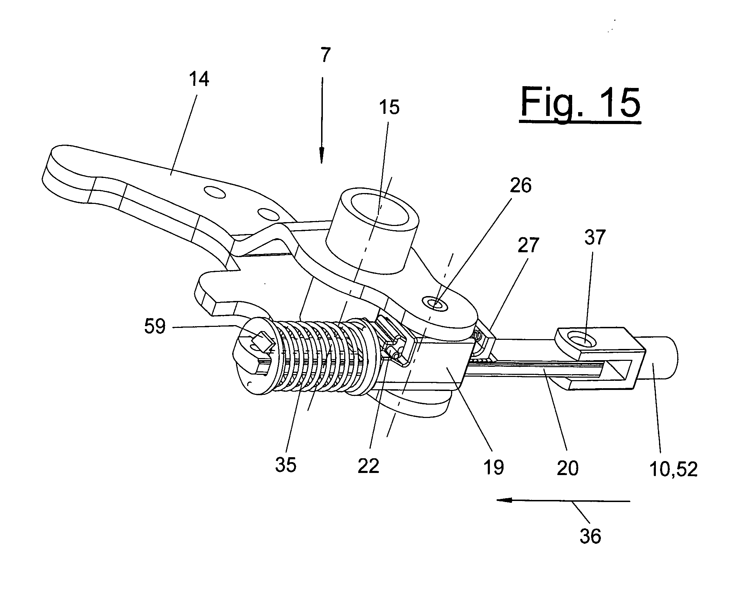

Figur 14, 15 und 17 zeigen die Übertragungseinrichtung (10) und die Nachstelleinrichtung (7) in einer für die Erstmontage der Bremseinrichtung (4) vorgesehenen Stellung. Hierbei ist bei der Variante von Figur 15 die Spannfeder (35) in der Nachstelleinrichtung (7) über eine lösbare Verriegelung (59) blockiert. Die Verriegelung (59) besteht zum Beispiel aus einem gebogenen Blechstreifen, der am vorderen Ende eine abgewinkelte kleine Rückhaltenase trägt. Am hinteren Ende ist der Blechstreifen mit einer rückwärtigen Stützscheibe der Spannfeder (35) fest verbunden. Die vordere abgewinkelte Nase ragt durch eine Öffnung der vorderen Stützplatte der Spannfeder (35) und hält diese in Spannstellung der Feder (35) fest. Der Blechstreifen hat hierfür eine entsprechend kleine Länge. Die Verriegelung (59) kann bei Bedarf durch einen Schraubendreher oder ein anderes Werkzeug gelöst werden, in dem die gebogene Nase des Blechstreifens zur Zahnstange (20) hingedrückt wird und dadurch in der entsprechend großen Öffnung der vorderen Stützplatte eintauchen kann. Hierdurch wird der Hintergriff der Nase gelöst und die Spannfeder (35) kann sich unter Anzug der Nachstelleinrichtung (7) entspannen.

In der zweiten Variante der Nachstelleinrichtung (7) von Figur 16 kann die Zahnscheibe (60) mit gespannter Spannfeder oder Spreizfeder (62) durch eine geeignete Verriegelung (nicht dargestellt) arretiert werden. In dieser Arretierstellung kann die Übertragungseinrichtung (10) bequem am Anschluss (37) eingehängt werden. Das Rastgesperre (23) ist außer Eingriff mit der Klinke (61), die an einem glattwandigen rückwärtigen Bogenbereich der Zahnscheibe (60) lose anliegt.

Die Übertragungseinrichtung (10) besteht aus dem Bremsgestänge (52) und zwei Bremsseilzügen (53), die als sogenannte Bowdenzüge ausgebildet sind. Das Bremsgestänge (52) trägt am vorderen Ende den vorerwähnten Anschluss (37) mit der drehbaren Verbindung zur Zahnstange (20) oder Zahnscheibe (60). Am rückwärtigen Ende ist das Bremsgestänge (52) mit einem Ausgleichsprofil (56) über ein einfaches zapfenartiges Gelenk (57) verbunden. Das Ausgleichsprofil (56) kann sich um das Gelenk (57) mit der vorzugsweise vertikalen Achse drehen und hierbei die am vertikalen Steg des Ausgleichsprofils (56) angeschlossenen Seelen oder Bremsseile (55) der Bremsseilzüge (53) spannen. Die Mäntel (54) der Bremsseilzüge (53) sind ihrerseits an einem Stützprofil oder Widerlager (58) befestigt, welches an der Unterseite der Achse (8) angeordnet ist.

Bei der Erstmontage der Bremseinrichtung (4) werden zunächst die Bremsseilzüge (53) an den Radseilbremsen (9) eingehängt und mit ihren Mänteln (54) am Widerlager (58) befestigt. Die vorstehenden Seelen (55) werden dann am Ausgleichsprofil (56) eingehängt. Das Bremsgestänge (52) ist bereits mit dem Ausgleichsprofil (56) drehbar verbunden und wird mit seinem vorderen Anschluss (37) lediglich über einstecken eines Lagerstiftes mit der Zugstange (20) oder der Zahnscheibe (60) der Nachstelleinrichtung (7) in Verbindung gebracht. An der Nachstelleinrichtung (7) ist die Spannfeder (35,62) zunächst in der vorbeschriebenen Weise in Spannstellung verriegelt, so dass die Zahnstange (20) oder Zahnscheibe (60) nach hinten genügend weit vorsteht, um eine bequeme und einfache Verbindung mit dem Anschluss (37) zu ermöglichen. Anschließend wird die Verriegelung (59) oder die Klinke (61) gelöst, wobei die Spannfeder (35,62) das Bremsgestänge (52) nach vorn zieht und zugleich über Mitnahme des Ausgleichsprofils (56) die Bremsseilzüge (53) spannt. Das in der Übertragungseinrichtung (10) vorhandene Spiel wird hierdurch automatisch kompensiert.

Figur 17 zeigt die Nachstelleinrichtung (7) in einer übermäßigen Verschleißstellung. Hier ist der Verschleiß an den Radbremsen (9) und/oder der Übertragungseinrichtung (10) so groß geworden, dass der begrenzte Eingriffsweg des Rastgesperres (23) überschritten ist und die Klinke (61) außer Eingriff mit der Zahnscheibe (60) gekommen ist. Die Spann- oder Spreizfeder (62) ist weitgehend entspannt. Eine solche Verschleißstellung wird dem Bediener durch die extreme Zahnscheibenstellung deutlich signalisiert.

Abwandlungen der gezeigten Ausführungsformen sind in verschiedener Weise möglich. Zum einen kann der Fahrzeuganhänger (1) beliebig ausgebildet sein. Variabel ist ferner die konstruktive Gestaltung der Auflaufeinrichtung (5). Auch die Nachstelleinrichtung (7) kann konstruktiv unterschiedlich ausgebildet sein. Insbesondere ist eine kinematische Umkehr und entsprechende Umgestaltung bzw. geänderte Anordnung von Zugelement (20) und Klemmgehäuse (19) möglich. Die Nachstelleinrichtung (7) an der Auflaufeinrichtung (5) kann außerdem ähnlich wie in den Varianten von Figur 10 bis 13 ausgebildet sein.

### BEZUGSZEICHENLISTE

- 1: Fahrzeuganhänger
- 2: Deichsel
- 3: Anhängerkupplung
- 4: Bremseinrichtung
- 5: Bremsauslöser, Auflaufeinrichtung
- 6: Bremsauslöser, Handbremseinrichtung
- 7: Nachstelleinrichtung
- 8: Achse
- 9: Radbremse
- 10: Übertragungseinrichtung
- 11: Zugstange
- 12: Führungsrohr, Kartusche
- 13: Dämpfer
- 14: Umlenkhebel
- 15: Schwenkachse
- 16: Handbremshebel
- 17: Mitnehmer
- 18: Abreißseil
- 19: Klemmgehäuse
- 20: Zugelement, Zahnstange
- 21: Sperrelement, Klemmstück
- 22.: Zwangsführung
- 23: Rastgesperre, Verzahnung
- 24: Keilführung
- 25: Hohlraum
- 26: Lager
- 27: Ansatz
- 28: Feder
- 29: Stift
- 30: Steg
- 31: Kopf
- 32: Führungsstift
- 33: Führungsansatz
- 34: Leitfläche
- 35: Spannfeder, Schraubenfeder
- 36: Anzugrichtung
- 37: Anschluss, Drehlager, Lagerauge
- 38: Teleskoprohr
- 39: Rohrabschnitt innen
- 40: Rohrabschnitt außen
- 41: Sperrklinke lang
- 42: Sperrklinke kurz
- 43: Klinkenöffnung
- 44: Klinkenfeder
- 45: Haltebügel
- 46: Bügelöffnung
- 47: Anschlag
- 48': Gestängeteil
- 49: Gestängeteil
- 50: Klinkengesperre
- 51: Nachstellrichtung
- 52: Bremsgestänge
- 53: Bremsseilzug, Bowdenzug
- 54: Mantel
- 55: Seele, Bremsseil
- 56: Ausgleichsprofil, Waagebalken
- 57: Gelenk
- 58: Stützprofil, Widerlager
- 59: Verriegelung
- 60: Zugelement, Zahnscheibe
- 61: Sperrelement, Klinke
- 62: Spannfeder, Spreizfeder
- 63: Lagerstift Umlenkhebel
- 64: Lagerstift Zahnbogen
- 65: Klinkenachse
- 66: Klinkenfeder
- 67: Ansatz
- 68: Lösestift

## Patentansprüche

1. Bremseinrichtung für Fahrzeuganhänger (1) mit mindestens einem Bremsauslöser, insbesondere einer Auflaufeinrichtung (5) und einer Handbremseinrichtung (6) und einer hieran angeschlossenen Übertragungseinrichtung (10), vorzugsweise einem Bremsgestänge, zur Verbindung mit den Radbremsen (8), wobei die Übertragungseinrichtung (10) zur Bremsbetätigung in Anzugrichtung (36) bewegbar ist, **dadurch gekennzeichnet, dass** die Übertragungseinrichtung (10) mit einer Nachstelleinrichtung (7) versehen ist, welche die Übertragungseinrichtung (10) in Anzugrichtung (36) unter Spannung hält.

2. Bremseinrichtung nach Anspruch 1, **dadurch gekennzeichnet, dass** die Auflaufeinrichtung (5) eine beweglich gelagerte und mit der Anhängerkupplung (4) verbundene Zugstange (12) sowie einen Umlenkhebel (14) aufweist, wobei die Nachstelleinrichtung (7) an der Verbindungsstelle zwischen Umlenkhebel (14) und Übertragungseinrichtung (10) angeordnet ist.

3. Bremseinrichtung nach Anspruch 1 oder 2, **dadurch gekennzeichnet, dass** die Handbremseinrichtung (6) einen vorzugsweise gleichachsig mit dem Umlenkhebel (14) gelagerten Handbremshebel (16) aufweist, der mit dem Umlenkhebel (14) über einen Mitnehmer (17) in Schleppverbindung steht.

4. Bremseinrichtung nach Anspruch 2 oder 3, **dadurch gekennzeichnet, dass** die Nachstelleinrichtung (7) ein mit der Übertragungseinrichtung (10) verbundenes Zugelement (20,60) und ein Sperrelement (21,61) aufweist, die über ein gegen die Anzugrichtung (36) wirkendes Rastgesperre (23) in Eingriff miteinander stehen, wobei eine Spannfeder (35,62) in Anzugrichtung (36) nachstellend auf das Zugelement (20,60) einwirkt.

5. Bremseinrichtung nach Anspruch 4, **dadurch gekennzeichnet, dass** das Rastgesperre (23) in Lösestellung der Bremseinrichtung (4) geöffnet ist.

6. Bremseinrichtung nach Anspruch 4 oder 5, **dadurch gekennzeichnet, dass** das Zugelement (20,65) drehbar (37) mit der Übertragungseinrichtung (10) verbunden ist.

7. Bremseinrichtung nach Anspruch 4, 5 oder 6, **dadurch gekennzeichnet, dass** das Zugelement (20) als Zahnstange und das Sperrelement (21) als Klemmstück ausgebildet sind, wobei das Klemmstück (21) und die Zahnstange in einem mit dem Umlenkhebel (14) drehbar verbundenen Klemmgehäuse (19) längsbeweglich geführt sind.

8. Bremseinrichtung nach Anspruch 7, **dadurch gekennzeichnet, dass** das Klemmgehäuse (19) und das Klemmstück (21) eine gegenseitige Keilführung (24) aufweisen, die unter Einwirkung einer Federanordnung (28) den Rasteingriff von Klemmstück (21) und Zugelement (20) sichert.

9. Bremseinrichtung nach Anspruch 7 oder 8, **dadurch gekennzeichnet, dass** die Spannfeder (35) am vorderen Ende des Zugelements (20) angeordnet und am Klemmgehäuse (19) abgestützt ist.

10. Bremseinrichtung nach Anspruch 4, 5 oder 6, **dadurch gekennzeichnet, dass** das Zugelement als Zahnscheibe (60) und das Sperrelement als Klinke (61) ausgebildet sind, die beide drehbar am Umlenkhebel (14) gelagert sind und über das Rastgesperre (23) in Eingriff stehen, wobei die Spannfeder (65) als Spreizfeder ausgebildet ist und auf die Zahnscheibe drehend einwirkt.

11. Bremseinrichtung nach Anspruch 1, **dadurch gekennzeichnet, dass** die Nachstelleinrichtung (7) in der Übertragungseinrichtung (10) angeordnet ist.

12. Bremseinrichtung nach Anspruch 11, **dadurch gekennzeichnet, dass** die Nachstelleinrichtung (7) ein Teleskoprohr (38) mit zwei Rohrabschnitten (39,40) aufweist, die untereinander durch eine Spannfeder (35) und endseitig mit jeweils einem Abschnitt (48,49) einer geteilten Übertragungseinrichtung (10) verbunden sind, wobei zwischen den Rohrabschnitten (39,40) ein die gegenseitige Bewegung der Rohrabschnitte (39,40) hemmendes federbelastetes (44) Klinkengesperre (50) angeordnet ist, das an einem relativ ortsfesten Anschlag (47) lösbar ist.

13. Bremseinrichtung nach Anspruch 11 oder 12, **dadurch gekennzeichnet, dass** das Klinkengesperre (50) zwei auf einem Rohrabschnitt (38) kippfähig gelagerte und durch eine Klinkenfeder (44) in Kippstellung gezwungene Sperrklinken (41,42) aufweist, welche an einem Haltebügel (45) schwenkfähig geführt sind, der am anderen Rohrabschnitt (40) befestigt ist.

14. Bremseinrichtung nach Anspruch 11, 12 oder 13, **dadurch gekennzeichnet, dass** die Sperrklinken (41,42) eine unterschiedliche Länge aufweisen, wobei der Anschlag (47) mit der längeren Sperrklinke (41) zusammenwirkt.

15. Bremseinrichtung nach einem der vorhergehenden Ansprüche, **dadurch gekennzeichnet, dass** die Nachstelleinrichtung (7) eine lösbare Verriegelung (59) für die Spannfeder (35) in Spannstellung aufweist.

16. Bremseinrichtung nach einem der vorhergehenden Ansprüche, **dadurch gekennzeichnet, dass** die Übertragseinrichtung (10) ein Ausgleichsprofil (56) für den Anschluss von Bremsseilzügen (53) aufweist, welches mit dem Bremsgestänge (52) über ein einfaches Drehgelenk (57) verbunden ist.
